# EUROPÄISCHE PATENTSCHRIFT

(11) **EP 0 891 246 B1**
(45) Veröffentlichungstag und Bekanntmachung des Hinweises auf die Patenterteilung: **11.07.2001**
(21) Anmeldenummer: 97907071.1
(22) Anmeldetag: 05.03.1997
(51) Int. Cl.: B29C 33/56, B29D 11/00

(54) **VERFAHREN ZUM GEGENSEITIGEN POSITIONIEREN VON PAAREN GEGENÜBERLIEGENDER FORMBESTIMMENDER FORMWERKZEUG-TEILE UND FORMWERKZEUG ZUR HERSTELLUNG VON PRÄZISIONSTEILEN, INSBESONDERE VON KONTAKTLINSEN**
METHOD OF MUTUALLY POSITIONING A PAIR OF SHAPING-TOOL HALVES FACING EACH OTHER, AND SHAPING TOOL FOR THE MANUFACTURE OF PRECISION-MADE ARTICLES, IN PARTICULAR CONTACT LENSES
PROCEDE POUR LE POSITIONNEMENT MUTUEL DE PAIRES D'ELEMENTS DE MOULE OPPOSES, ET MOULE POUR LA FABRICATION DE PIECES DE PRECISION, NOTAMMENT DE LENTILLES DE CONTACT

(30) Priorität: 18.03.1996 DE 19610563
(43) Veröffentlichungstag der Anmeldung: 20.01.1999
(73) Patentinhaber: Novartis AG, 4058 Basel (CH); Novartis-Erfindungen Verwaltungsgesellschaft m.b.H., 1235 Wien (AT)
(72) Erfinder: BAUR, Karl-Albert, D-70806 Kornwestheim (DE); BICKERT, Stefan, 88662 Ueberlingen (DE); REINISCH, Hubert, 71691 Freiberg (DE)
(74) Vertreter: Becker, Konrad
(86) Internationale Anmeldenummer: EP9701105
(87) Internationale Veröffentlichungsnummer: WO9734752

(56) Entgegenhaltungen:
- EP-A- 0 505 738
- DE-A- 3 844 011
- FR-A- 1 128 971
- FR-A- 2 170 220
- GB-A- 650 692
- US-A- 2 253 697
- US-A- 2 333 051
- US-A- 2 516 373

## Beschreibung

Die Erfindung betrifft ein Verfahren zum gegenseitigen Positionieren von Paaren gegenüberliegender formbestimmender Formwerkzeug-Teile, die zur Bildung eines Formhohlraumes zusammenwirken, für die Herstellung von Präzisionsteilen, insbesondere von Kontaktlinsen.

Die Erfindung betrifft weiterhin ein Formwerkzeug zur Herstellung von Präzisionsteilen, insbesondere von Kontaktlinsen, das aus zwei, einen Formhohlraum bildenden Formhälften mit formbestimmenden Werkzeugteilen besteht.

Nach dem Stand der Technik besteht das Formwerkzeug aus Trägerplatten in jeder Formhälfte, in welchen jeweils ein Werkzeugeinsatz oder mehrere Werkzeugeinsätze gehaltert sind. Die Werkzeugeinsätze der beiden Formhälften fluchten miteinander und bilden im geschlossenen Zustand der Form zwischen sich einen Formhohlraum. Bei bekannten Formwerkzeugen zur Herstellung von Kontaktlinsen bestehen die Trägerplatten aus Aluminium. In eine Bohrung der Trägerplatte ist eine dünnwandige, zylindrische Spannbuchse eingesetzt und mit einem Flansch an der Trägerplatte befestigt. In der Spannbuchse sitzt eine hülsenförmige Fassung für den Werkzeugeinsatz. Die Spannbuchse bildet eine Tasche, in welche Druckmittel (Spannöl) einleitbar ist. Dadurch wird der Mantel der Spannbuchse verformt und die Fassung festgeklemmt. Zur anfänglichen Positionierung der Spannbuchse dient ein Zentrierbolzen. In den Trägerplatten können mehrere Werkzeugeinsätze oder Werkzeugeinsätze, die mehrere Formhohlräume zur gleichzeitigen Herstellung mehrerer Kontaktlinsen o. dergl. in der beschriebenen Weise gehalten sein.

Die bekannten Formwerkzeuge erfordern jeweils eine grossen Anzahl von Bauteilen hoher Präzision. Alle Bauteile bedürfen einer aufwendigen Oberflächenbehandlung. Die Justage der in den beiden Formhälften einander gegenüberliegenden Werkzeugeinsätze zueinander ist schwierig und zeitaufwendig und damit teuer. Toleranzen der Bauteile addieren sich , so dass die Genauigkeit bei den bekannten Formwerkzeugen begrenzt ist. Die Handhabung der Formwerkzeuge erfordert aus diesem Grunde grosse Vorsicht.

Wesentlich ist weiterhin, dass thermische Verfahrensschritte bei den bekannten Formwerkzeugen nicht zulässig sind. Die Längenausdehnung der Bauteile ist unterschiedlich. Dadurch wird bei Temperaturänderungen die Justage stark gestört. Auch der Oeldruck des hydraulischen Spannsystems ändert sich bei thermischen Einflüssen.

Ein Problem ergibt sich beim Oeffnen der Form. Dann können die geformten Präzisionsteile entweder von der einen oder von der anderen Formhälfte festgehalten werden. Das hängt von zufälligen, schwer zu kontrollierenden Einflüssen ab. Diese Unbestimmtheit erschwert das Herausnehmen der Präzisionsteile, insbesondere wenn dies automatisch durch einen Mechanismus geschehen soll.

In der US 2,516,373 ist eine Gussvorrichtung für die Herstellung von Brillengläsern mit einem integrierten Halterungsbügel beschrieben. Die Gussvorrichtung besteht aus zwei Trägerplatten, in die jeweils die Formwerkzeuge zur Herstellung der Gläser eingelassen sind, wobei die Formwerkzeuge durch Bolzen in der Trägerplatte verankert sind. Allerdings ist die Präzision der mit diesem Werkzeug hergestellten Formteile insbesondere für Kontaktlinsen zu gering.

Aus der FR 1,128,971 ist bekannt, die Formhälften einer Gussform aus Quarzglass herzustellen, da Quarz sich durch einen sehr geringen Wärmekoefizienten auszeichnet. Es ist der Schrift jedoch nicht zu entnehmen, wie derartige Formhälften in Trägerplatten eines Formwerkzeugs eingebaut werden können.

Der Erfindung liegt die Aufgabe zugrunde, ein Formwerkzeug der eingangs genannten Art einfacher aufzubauen, die Justage zu vereinfachen und einer Dejustage entgegenzuwirken.

Erfindungsgemäss wird diese Aufgabe durch ein Verfahren zum gegenseitigen Positionieren von Paaren gegenüberliegender formbestimmender Formwerkzeug-Teile, die zur Bildung eines Formhohlraumes zusammenwirken, gelöst, das dadurch gekennzeichnet ist, dass
(a) die Position jedes der Werkzeugteile durch einen zugeordneten Körper aus einem Material bestimmt wird, das in einem Arbeitstemperatur-Bereich eine vernachlässigbare thermische Ausdehnung zeigt, und
möglich, thermische Verfahrensschritte anzuwenden. Beispielsweise kann durch Erwärmen einer der Formhälften eine eindeutig unterschiedliche Haftung der geformten Präzisionsteile in den Formhälften sichergestellt werden, so dass die Formteile sich nach dem Oeffnen der Form alle in einer Formhälfte befinden.

Ein Formwerkzeug zur Herstellung von Präzisionsteilen, insbesondere von Kontaktlinsen, das aus zwei einen Formhohlraum bildenden Formhälften mit formbestimmenden Werkzeugteilen besteht, ist dementsprechend dadurch gekennzeichnet, dass
(a) die Position der formbestimmenden Werkzeugteile in jeder der Werkzeughälften durch Träger aus einem Material das in einem Arbeitstemperatur-Bereich eine vernachlässigbare thermische Ausdehnung zeigt, festgelegt ist und
(b) die gegenseitige Position der Träger durch unmittelbar zwischen den beiden Trägern wirksame, hochgenaue Positionierungs-Mittel festgelegt ist.

Ausgestaltung der Erfindung sind Gegenstand der Unteransprüche.

Ein Ausführungsbeispiel der Erfindung ist nachstehend unter Bezugnahme auf die zugehörigen Zeichnungen näher erläutert.
- Fig. 1: ist eine schematische Darstellung zweier Formhälften mit darin gehalterten Werkzeugeinsätzen.
- Fig. 2: zeigt schematisch die gegenseitige Positionierung der Formhälften.
- Fig. 3: ist eine schematische Darstellung und zeigt eine Positionierplatte, in welcher einzelne Werkzeugeinsätze zur Herstellung je einer Kontaktlinse gehaltert sind, wobei die Positionierplatte in der in Fig. 2 dargestellten Weise zu der gegenüberliegenden Positionierplatte positioniert ist.
- Fig. 4: ist eine schematische Darstellung und zeigt eine Positionierplatte, in welche eine Mehrzahl von Werkzeugeinsätzen gehaltert sind, wobei jeder dieser Werkzeugeinsätze zur Herstellung mehrerer Kontaktlinsen o. dergl. eingerichtet ist aber die Positionierplatten in der in Fig. 2 dargestellten Weise zueinander positioniert sind.
- Fig. 5: ist eine schematische Darstellung und zeigt zwei Werkzeugeinsätze aus Glaskeramik, die jeder zur Herstellung einer Mehrzahl von Kontaktlinsen eingereicht sind und die ohne Positionierplatte unmittelbar auf einer Trägerplatte aus Glaskeramik montiert sind, wobei die Werkzeugeinsätze selbst Positioniermittel zur Positionierung gegenüber dem (nicht dargestellten) Gegenstück versehen sind.
- Fig. 6: zeigt ein Formwerkzeug, bei welchem eine einzige Platte aus Glaskeramik Vertiefungen oder Vorsprünge zur Herstellung einer Mehrzahl von Kontaktlinsen sowie Positioniermittel zum Positionieren der Platte zu dem entsprechend aufgebauten Gegenstück aufweist, wobei diese Platte gleichzeitig die Funktion der Tragplatte, der Positionierplatte und des Werkzeugeinsatzes erfüllt.
- Fig. 7: zeigt eine weitere Ausführungsform eines Formwerkzeugs, bei welcher im Schliesszustand des Formwerkzeuges die Tragplatten relativ zueinander positioniert sind.

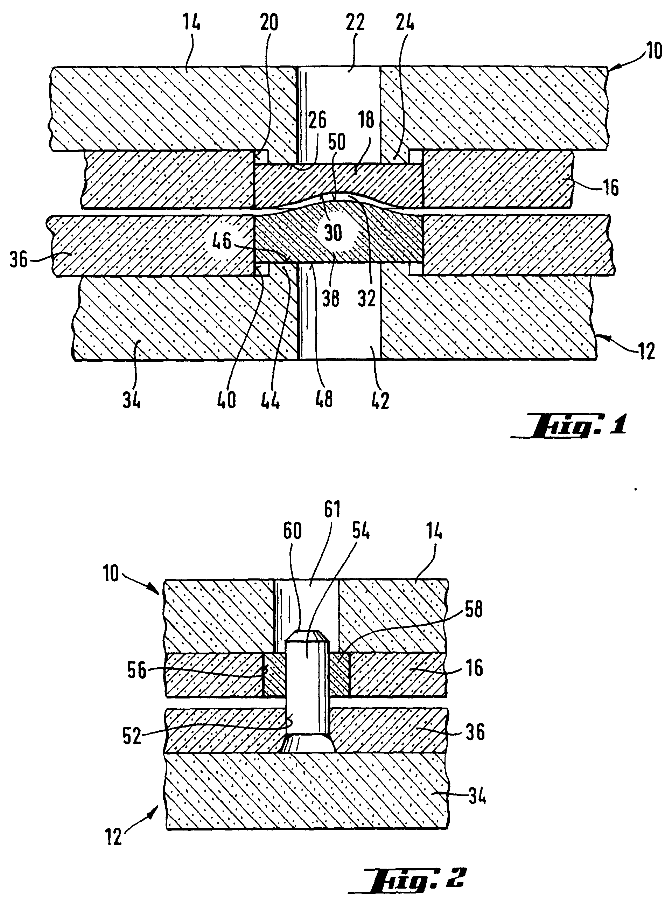

In Fig. 1 ist mit 10 eine "obere" Formhälfte und mit 12 eine "untere" Formhälfte bezeichnet. Die obere Formhälfte 10 besteht aus einer Trägerplatte 14, einer Positionierplatte 16 und einem Werkzeugeinsatz 18. Der Werkzeugeinsatz 18 ist in einem Durchbruch 20 der Positionierplatte durch optisches Ansprengen positioniert. Die Trägerplatte 14 weist im Bereich des Werkzeugeinsatzes 18 eine Bohrung 22 auf. Auf der dem Werkzeugeinsatz 18 zugewandten Oberfläche ist um die Bohrung herum ein ringförmiger Vorsprung 24 mit einer polierten Stirnfläche 26 gebildet. An der Stirnfläche 26 liegt die ebenfalls polierte Rückseite 28 des Werkzeugeinsatzes 18 an. Die Rückseite 28 ist mit der Stirnfläche 26 durch optisches Ansprengen verbunden. Der Werkzeugeinsatz 18 weist eine mit einer Vertiefung versehene Vorderseite 30 auf, welche einen Formhohlraum 32 begrenzt. Die Positionierplatte 16 ist mit der Trägerplatte 14 verbunden.

Der Werkzeugeinsatz bildet hier einen "formbestimmenden Werkzeugteil".

Die "untere" Formhälfte 12 ist ähnlich aufgebaut wie die Formhälfte 10. Die untere Formhälfte 12 besteht aus einer Trägerplatte 34, einer Positionierplatte 36 und einem Werkzeugeinsatz 38. Der Werkzeugeinsatz 38 ist in einem Durchbruch 40 der Positionierplatte 36 durch Ansprengen positioniert. Die Trägerplatte 34 weist im Bereich des Werkzeugeinsatzes 38 eine Bohrung 42 auf. Auf der dem Werkzeugeinsatz 38 zugewandten Oberfläche ist um die Bohrung 42 herum ein ringförmiger Vorsprung 44 mit einer polierten Stirnfläche 46 gebildet. An der Stirnfläche 46 liegt die ebenfalls polierte Rückseite 48 des Werkzeugeinsatzes 38 an. Die Rückseite 48 ist mit der Stirnfläche 46 ebenfalls durch optisches Ansprengen verbunden. Der Werkzeugeinsatz 38 weist eine mit einer Wölbung versehene Vorderseite 50 auf, welche den Formhohlraum 32 auf der in Fig. 1 unteren Seite begrenzt. Die Positionierplatte 36 ist mit der Trägerplatte 34 verbunden.

Die Trägerplatte 14 und 34, die Positionierplatten 16 und 36 und die Werkzeugeinsätze 18 und 38 sind sämtlich aus einem Material mit vernachlässigbarer thermischer Ausdehnung in dem Arbeitsbereich des Formwerkzeuges hergestellt.

Dieses Material ist vorzugsweise eine intransparente Glaskeramik. Es kann aber auch eine Metall-Legierung wie "Invar" verwendet werden. Die Werkzeugeinsätze sind vorzugsweise aus einem transparenten Material (bzw. einer der Wekrzeugeinsätze aus einem transparenten und der andere aus einem absorbierenden, also intransparenten Material) hergestellt, so dass das geformte Erzeugnis, z.B. eine Kontaktlinse, in der Form mit Licht behandelt werden kann. Dafür hat sich Quarzglas als geeignet erwiesen, das auch eine sehr geringe thermische Ausdehnung zeigt. Das Lichtbündel wird dabei durch die Wand der Bohrungen 22 bzw. 42 scharfrandig begrenzt, da das Material der Trägerplatten 14 und 34 und das der Positionierplatten 16 bzw. 36 intransparent ist. Dadurch kann eine sehr randgenaue Herstellung der Kontaktlinsen erfolgen.

Die Trägerplatten 14 und 34 sind mit den zugehörigen Positionierplatten 16 und 36 ebenfalls durch optisches Ansprengen verbunden. Es kann aber auch eine andere Art der Befestigung angewandt werden.

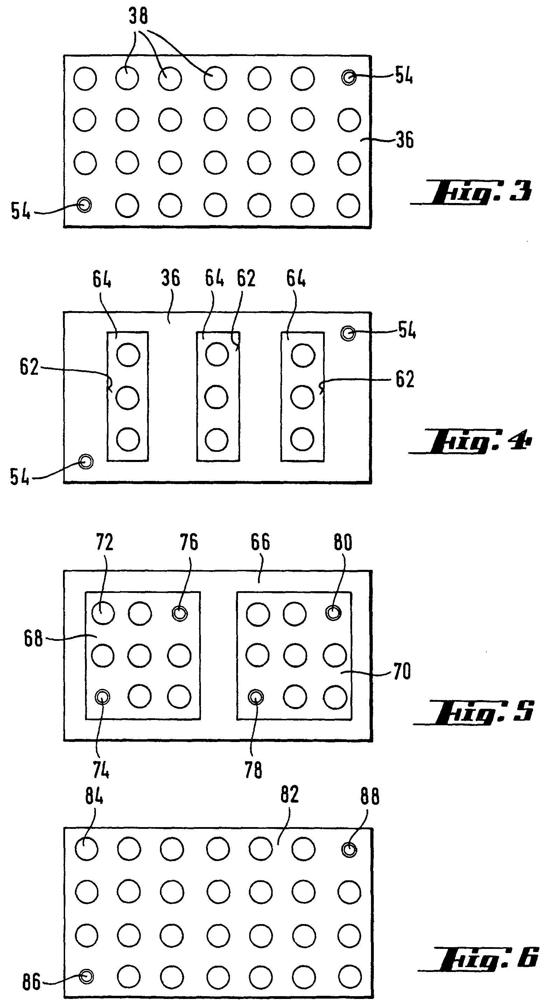

In Fig. 2 sind Positioniermittel dargestellt, welche eine genaue Ausrichtung der Positionierplatten 16 und 36 zueinander gewährleisten. In der Positionierplatte 36 ist ein Bohrung 52 gebildet. In dieser Bohrung 52 sitzt mit enger Passung ein Indexbolzen 54. In der Positionierplatte 16 ist eine Bohrung 56 gebildet. In der Bohrung 56 sitzt ebenfalls mit enger Passung eine Indexbuchse 58. Bei geschlossener Form ist der Indexbolzen 54 mit geringen Toleranzen in der Indexbuchse 58 geführt. Der Indexbolzen 54 weist ein sich verjüngendes Ende 60 auf, so dass er bequem in die Indexbuchse 58 eingeführt werden kann. Die Trägerplatte 14 weist im Bereich des Indexbolzens 58 eine Bohrung 61 auf, in welche im Schliesszustand das Ende des Indexbolzens 54 hineinragt.

Das Oeffnen und Schliessen des Formwerkzeuges wird durch einen bekannten, nicht dargestellten Mechanismus bewerkstelligt. Wesentlich ist, dass dieser Mechanismus ein geringes seitliches Spiel der Trägerplatten 14 und 34 und der Positionierplatten 16 und 36 zueinander gestattet, so dass die Position der Positionierplatten und damit der Werkzeugeinsätze 18 und 38 zueinander ausschliesslich durch die an den Positionierplatten 16 und 36 angebrachten Positioniermittel (Fig. 2) bestimmt werden kann.

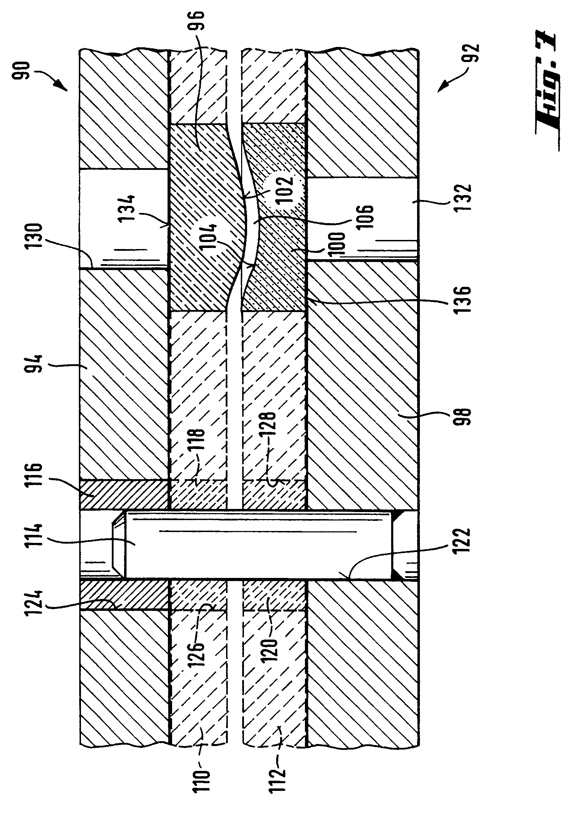

In Fig. 3 ist ein Formteil eines Formwerkzeugs der in Fig. 1 und 2 dargestellten Art mit einer Mehrzahl von Werkzeugeinsätzen 38 schematisch dargestellt. Die Werkzeugeinsätze 38 sind hier jeweils für die Herstellung einer einzigen Kontaktlinse (oder eines sonstigen Präzisionsteils) eingerichtet. Diese Werkzeugeinsätze 38 sind dann in Reihen und Spalten von Durchbrüchen 40 (Fig. 1) der Positionierplatte 36 gehaltert. In den Ecken der Positionierplatte 36 sitzen zwei Indexbolzen 54 nach Art von Fig. 2.

Fig. 4 zeigt eine abgewandelte Ausführung einer Formhälfte. Die Positionierplatte 36 weist hier mehrere z.B. rechteckige Durchbrüche 62 auf. In den Durchbrüchen 62 sitzen entsprechende Werkzeugeinsätze 64, die jeder eine Mehrzahl von Vertiefungen oder Wölbungen zur Herstellung einer Mehrzahl von Kontaktlinsen aufweist. Auch hier wird durch Indexbolzen 54 eine Zentrierung der Positionierplatte 36 zu dem Gegenstück gewährleistet.

Auch hier sind alle Teile aus einem Material wie Glaskeramik mit einer in einem Arbeitsbereich vernachlässigbaren thermischen Ausdehnung hergestellt.

Fig. 5 zeigt eine Anordnung, bei welcher unmittelbar auf einer Trägerplatte 66 zwei Werkzeugeinsätze 68 und 70 aus Glaskeramik montiert sind. Jeder dieser Werkzeugeinsätze 68 und 70 ist zur Herstellung einer Mehrzahl von Präzisionsteilen wie Kontaktlinsen eingerichtet und weist entsprechende Vertiefungen oder Wölbungen 72 auf. Jeder der Werkzeugeinsätze 68 und 70 ist durch Paare von Indexbolzen oder Indexbuchsen 74, 76 bzw. 78, 80 zu seinem Gegenstück, ähnlich wie im Zusammenhang mit Fig. 2 beschrieben, zentrierbar. Positionierplatten entfallen bei dieser Lösung.

Bei der Ausführung nach Fig. 6 ist als Werkzeughälfte nur eine Platte 82 aus Glaskeramik oder dergleichen vorgesehen. Die Platte 82 weist Reihen und Spalten von Vertiefungen oder Wölbungen 84 zur gleichzeitigen Formung einer Mehrzahl von Kontaktlinsen auf. Die Platte 82 ist durch Positioniermittel 86, 88 zu einem entsprechenden Gegenstück genau zentrierbar. Hier entfällt sowohl eine separate Trägerplatte als auch eine Positionierplatte. Vielmehr wird die Form der Kontaktlinsen durch die Vertiefungen der Wölbungen 84 an der die Werkzeughälfte bildenden Platte 82 bestimmt.

Fig. 7 zeigt eine weitere Ausführung eines Formwerkzeuges. Das Oberteil des Formwerkzeuges ist mit 90 bezeichnet. Das Unterteil des Formwerkzeugs ist mit 92 bezeichnet. Das Oberteil 90 enthält eine Trägerplatte 94 und einen Werkzeugeinsatz 96. Fig. 7 ist eine abgebrochene Darstellung. In der Regel sind auf einer Trägerplatte 94 eine Mehrzahl von Werkzeugeinsätzen 96 montiert. Das Unterteil 92 enthält eine Trägerplatte 98 und einen Werkzeugeinsatz 100. Die beiden Werkzeugeinsätze 96 und 100 bilden die "formbestimmenden Werkzeugteile" und begrenzen mit einer gewölbten Fläche 102 bzw. einer Vertiefung 104 einen Formhohlraum 106. Die Trägerplatten 94 und 98 sind aus Glaskeramik mit vernachlässigbarer thermischer Ausdehnung hergestellt. Die einander zugewandten Oberflächen der Trägerplatten 94 und 98 sind poliert.

Die Werkzeugeinsätze 96 und 100 sitzen in Bohrungen je einer Positionierplatte 110 bzw. 112. Die Positionierplatten sind ebenfalls aus Glaskeramik oder einem sonstigen Material mit vernachlässigbarer thermischer Ausdehnung hergestellt.

Positioniermittel in Form eines Indexbolzens 114 und von Indexbuchsen 116, 118 und 120 sorgen für eine genaue relative Positionierung nicht nur der Positionierplatten 110 und 112 sondern auch der Trägerplatten 94 und 98 zueinander. Zu diesem Zweck sitzt der Indexbolzen 114 in einer Bohrung 122 der Trägerplatte 98. Die Indexbuchse 116 sitzt in einer Bohrung 124 der anderen Trägerplatte 94. Die weiteren Indexbuchsen 118 und 120 sitzen in Bohrungen 126 bzw. 128 der Positionierplatten 110 bzw. 112. Alle Indexbuchsen 116, 118 und 120 sind auf dem Indexbolzen 114 geführt.

Fluchtend mit den Werkzeugeinsätzen 96 und 100 sind in den Trägerplatten 94 bzw. 98 Bohrungen 130 bzw. 132 angebracht.

Durch die Indexbolzen 114 und Indexbuchsen 116, 118 und 120 sind die Trägerplatten 94 und 98 und die Positionierplatten 110 und 112 genau zueinander ausgerichtet. Damit ist auch eine genaue Ausrichtung der in den Positionierplatten 110 bzw. 112 gehaltenen Werkzeugeinsätze 96 und 100 sowohl zueinander als auch zu den Trägerplatten 94 bzw. 98 gewährleistet. Diese Positionen sind von der Temperatur weitestgehend unabhängig. In diesen Positionen werden die Werkzeugeinsätze 96 bzw. 100 mit einer polierten Rückseite 134 bzw. 136 an die polierten Oberflächen der Trägerplatten 94 bzw. 98 optisch angesprengt.

Nach diesem Ansprengen ist es möglich, die Positionierplatten 110 und 112 wieder abzunehmen, so dass die Formhälften 90 und 92 nur von den Trägerplatten 94 bzw. 98 und den daran optisch angesprengten Werkzeugeinsätzen 96 bzw. 100 gebildet sind. Deshalb sind in Fig. 7 die Positionierplatten 110 und 112 gestrichelt dargestellt.

Es ist natürlich aber auch möglich, die Positionierplatten 110 und 112 in dem Formwerkzeug zu belassen und z.B. ebenfalls durch optisches Ansprengen mit den Trägerplatten 94 bzw. 98 zu verbinden.

## Patentansprüche

1. Verfahren zum gegenseitigen Positionieren von Paaren gegenüberliegender formbestimmender Formwerkzeug-Teile (18, 38; 96,100), die zur Bildung eines Formhohlraumes (32; 106) zusammenwirken, für die Herstellung von Präzisionsteilen, insbesondere von Kontaktlinsen, bei dem die beiden den Formwerkzeugteilen (18, 38; 96, 100) zugeordneten Körper durch Positioniermittel in ihrer Lage zueinander genau festgelegt werden,
dadurch gekennzeichnet, dass
die Position jedes der Werkzeugteile (18, 38; 96,100) durch einen zugeordneten Körper aus einem
Material bestimmt wird, das in einem Arbeitstemperatur-Bereich eine vernachlässigbare thermische Ausdehnung zeigt.

2. Verfahren nach Anspruch 1, dadurch gekennzeichnet, dass
(a) die Werkzeugteile (18, 38; 96,100) in den so erhaltenen Positionen an je einem Träger (14, 34; 94, 98) aus einem Material, das in einem Arbeitstemperatur-Bereich eine vernachlässigbare thermische Ausdehnung zeigt, fixiert wird und
(b) der positionierende Körper anschliessend entfernt wird.

3. Verfahren nach Anspruch 2, dadurch gekennzeichnet, dass
(a) die Werkzeugteile (18, 38; 96,100) und die Träger (14, 34; 94, 98) mit polierten Planflächen versehen werden und
(b) die Fixierung der Werkzeugteile (18, 38; 96,100) durch optisches Ansprengen erfolgt.

4. Verfahren nach einem der Ansprüche 1 bis 3, dadurch gekennzeichnet, dass als Material, das in einem Arbeitstemperatur-Bereich eine vernachlässigbare thermische Ausdehnung zeigt, eine Glaskeramik verwendet wird.

5. Verfahren nach einem der Ansprüche 1 bis 3, dadurch gekennzeichnet, dass als Material, das in einem Arbeitstemperatur-Bereich eine vernachlässigbare thermische Ausdehnung zeigt, ein Quarzglas verwendet wird.

6. Verfahren nach einem der Ansprüche 1 bis 3, dadurch gekennzeichnet, dass als Material, das in einem Arbeitstemperatur-Bereich eine vernachlässigbare thermische Ausdehnung zeigt, eine Metall-Legierung geringer thermischer Ausdehnung, z.B. "Invar", verwendet wird.

7. Formwerkzeug zur Herstellung von Präzisionsteilen, insbesondere von Kontaktlinsen, das aus zwei, einen Formhohlraum (32;106) bildenden Werkzeughälften (10, 12; 90, 92) mit formbestimmenden Werkzeugteilen (18, 38; 96, 100) besteht,
dadurch gekennzeichnet, dass
(a) die Position der formbestimmenden Werkzeugteile (18, 38; 96, 100) in jeder der Werkzeughälften (10, 12; 90, 92) durch Träger (14, 34; 94, 98) aus einem Material das in einem Arbeitstemperatur-Bereich eine vernachlässigbare thermische Ausdehnung zeigt, festgelegt ist und
(b) die gegenseitige Position der Träger (14, 34; 94, 98) durch unmittelbar zwischen den beiden Trägern (14, 34; 94, 98) wirksame, hochgenaue Positionierungs-Mittel (54, 58; 114, 116) festgelegt ist.

8. Formwerkzeug nach Anspruch 7, dadurch gekennzeichnet, dass die Werkzeugeinsätze (18, 38; 96, 100) jeweils auf einer Trägerplatte (14, 34; 94, 98) aus einem Material, das in einem Arbeitstemperatur-Bereich eine vernachlässigbare thermische Ausdehnung zeigt, angebracht sind.

9. Formwerkzeug nach Anspruch 7 oder 8, dadurch gekennzeichnet, dass auf jeder Seite des Formhohlraumes (32) ein die Form des herzustellenden Präzisionsteils bestimmender Werkzeugeinsatz (18, 38; 96, 98) vorgesehen ist, der in einer Positionierplatte (16, 36; 110, 112) aus einem Material, das in einem Arbeitstemperatur-Bereich eine vernachlässigbare thermische Ausdehnung zeigt, am Umfang formschlüssig gehalten ist.

10. Formwerkzeug nach einem der Ansprüche 7 bis 9, dadurch gekennzeichnet, dass die Positioniermittel Indexbolzen (54; 114) umfassen.

11. Formwerkzeug nach Anspruch 9, dadurch gekennzeichnet, dass die Positionierplatten (16, 36) durch die Positioniermittel (54, 58) in einer genau definierten Lage zueinander gehalten werden.

12. Formwerkzeug nach Anspruch 10, dadurch gekennzeichnet, dass
(a) an einer der Positionierplatten (36) Indexbolzen (54) angebracht sind und
(b) die andere Positionierplatte (16) jeweils fluchtend mit dem Indexbolzen (54) einen Durchbruch (56) mit einer Indexbuchse (58) aufweist, wobei die einander gegenüberliegenden Werkzeugeinsätze (18, 38) korrekt zueinander ausgerichtet sind, wenn die Indexbolzen (54) in die Indexbuchsen (58) eingreifen.

13. Formwerkzeug nach Anspruch 10, dadurch gekennzeichnet, dass
(a) an einer der Trägerplatten (98) Indexbolzen (114) angebracht sind und
(b) die andere Trägerplatte (94) jeweils fluchtend mit dem Indexbolzen (114) einen Durchbruch (124) mit einer Indexbuchse (116) aufweist, wobei die einander gegenüberliegenden Werkzeugeinsätze (96, 100) korrekt zueinander ausgerichtet sind, wenn die Indexbolzen (114) in die Indexbuchsen (116) eingreifen.

14. Formwerkzeug nach Anspruch 13, dadurch gekennzeichnet, dass
(a) die Werkzeugeinsätze (96, 100) in Durchbrüchen von Positionierplatten (110, 112) gehalten sind,
(b) die Positionierplatten (110,112) mit Indexbuchsen (118,120) auf den die Trägerplatten (94, 98) zueinander positionierenden Indexbolzen (114) geführt und damit zueinander und zu den Trägerplatten (94, 98) positioniert sind und
(c) die Positionierplatten (110, 112) mit den Trägerplatten (94, 98) durch optisches Ansprengen verbunden sind.

15. Formwerkzeug nach einem der Ansprüche 8 bis 14, dadurch gekennzeichnet, dass die Trägerplatte (14, 34; 94, 98) jeweils einen Anschlag bildet (24, 44), an welchem der Werkzeugeinsatz (18, 38; 96,100) in der zur Trägerplatte (14, 34, 94, 98) senkrechten Richtung anliegt.

16. Formwerkzeug nach Anspruch 15, dadurch gekennzeichnet, dass der Werkzeugeinsatz (18, 38; 96, 100) mit der Trägerplatte (14, 34; 94, 98) durch optisches Ansprengen verbunden ist.

17. Formwerkzeug nach einem der Ansprüche 7 bis 16, dadurch gekennzeichnet, dass Führungsmittel zur Führung der Formhälften in die Schliessstellung eine geringe Seitenbewegung der Formhälften gestatten, so dass eine Ausrichtung allein nach den Positioniermitteln (54, 58) der Träger (16, 36) erfolgen kann.

18. Formwerkzeug nach Anspruch 8, dadurch gekennzeichnet, dass jeder der Werkzeugeinsätze (62) eine Mehrzahl von formhohlraumbegrenzenden Flächen zur gleichzeitigen Herstellung mehrerer zu formender Präzisionsteile aufweist.

19. Formwerkzeug nach Anspruch 7, dadurch gekennzeichnet, dass in jeder Formhälfte
(a) auf einer Trägerplatte (66) eine Mehrzahl von Werkzeugeinsätzen (68, 70) aus einem Material, das in einem Arbeitstemperatur-Bereich eine vernachlässigbare thermische Ausdehnung zeigt, montiert ist und
(b) jeder der Werkzeugeinsätze (68, 70) durch Positioniermittel (74, 76; 78, 80) zu seinem Gegenstück der anderen Formhälfte einzeln positioniert ist.

20. Formwerkzeug nach Anspruch 19, dadurch gekennzeichnet, dass jeder der Werkzeugeinsätze (68, 70) eine Mehrzahl von formhohlraumbegrenzenden Flächen zur gleichzeitigen Herstellung mehrerer zu formender Präzisionsteile aufweist.

21. Formwerkzeug nach Anspruch 7, dadurch gekennzeichnet, dass
(a) jede der Formhälften eine einzige Platte (82) aus einem Material, das in einem Arbeitstemperatur-Bereich eine vernachlässigbare thermische Ausdehnung zeigt, aufweist, in welcher eine Mehrzahl von formhohlraumbegrenzenden Flächen (84) zur gleichzeitigen Herstellung mehrerer zu formender Präzisionsteile gebildet ist, und
(b) diese Platte (82) durch Zentriermittel (86, 88) zu ihrem Gegenstück in der anderen Formhälfte positioniert ist.

22. Formwerkzeug nach einem der Ansprüche 7 bis 20, dadurch gekennzeichnet, dass als Material, das in einem Arbeitstemperatur-Bereich eine vernachlässigbare thermische Ausdehnung zeigt, eine Glaskeramik vorgesehen ist.

23. Formwerkzeug nach einem der Ansprüche 7 bis 20, dadurch gekennzeichnet, dass als Material, das in einem Arbeitstemperatur-Bereich eine vernachlässigbare thermische Ausdehnung zeigt, ein Quarzglas vorgesehen ist.

24. Formwerkzeug nach Anspruch 23, dadurch gekennzeichnet, dass als formbestimmende Werkzeugteile vorgesehene Formeinsätze aus Quarzglas bestehen.

25. Formwerkzeug nach einem der Ansprüche 7 bis 20, dadurch gekennzeichnet, dass als Material, das in einem Arbeitstemperatur-Bereich eine vemachlässigbare thermische Ausdehnung zeigt, eine Metall-Legierung geringer thermischer Ausdehnung, z.B. "Invar", vorgesehen ist.

## Claims

1. A method for the reciprocal positioning of pairs of opposed shape-determining moulding tool portions (18, 38; 96, 100) that co-operate to form a mould cavity (32; 106), for the manufacture of precision articles, especially contact lenses, in which the position of the two elements associated with the moulding tool portions (18, 38; 96, 100) relative to one another is determined precisely by positioning means,
in which method
the position of each of the tool portions (18, 38; 96, 100) is determined by an associated element made of a material that exhibits negligible thermal expansion in a working temperature range.

2. A method according to claim 1, in which
(a) the tool portions (18, 38; 96, 100) are each fixed, in the resulting positions, to a support (14, 34; 94, 98) made of a material that exhibits negligible thermal expansion in a working temperature range, and
(b) the positioning element is subsequently removed.

3. A method according to claim 2, in which
(a) the tool portions (18, 38; 96,100) and the supports (14, 34; 94, 98) are provided with polished flat surfaces, and
(b) the fixing of the tool portions (18, 38; 96,100) is effected by optical wringing.

4. A method according to any one of claims 1 to 3, in which a glass ceramics material is used as material that exhibits negligible thermal expansion in a working temperature range.

5. A method according to any one of claims 1 to 3, in which a quartz glass is used as material that exhibits negligible thermal expansion in a working temperature range.

6. A method according to any one of claims 1 to 3, in which a metal alloy having low thermal expansion, for example Invar, is used as material that exhibits negligible thermal expansion in a working temperature range.

7. A moulding tool for the manufacture of precision articles, especially contact lenses, that consists of two tool halves (10,12; 90, 92) having shape-determining tool portions (18, 38; 96, 100), which tool halves form a mould cavity (32; 106),
in which moulding tool
(a) the position of the shape-determining tool portions (18, 38; 96,100) in each of the tool halves (10,12; 90, 92) is determined by supports (14, 34; 94, 98) made of a material that exhibits negligible thermal expansion in a working temperature range, and
(b) the reciprocal position of the supports (14, 34; 94, 98) is determined by high-precision positioning means (54, 58; 114, 116) that act directly between the two supports (14, 34; 94, 98).

8. A moulding tool according to claim 7, in which the tool inserts (18, 38; 96, 100) are each mounted on a support plate (14, 34; 94, 98) made of a material that exhibits negligible thermal expansion in a working temperature range.

9. A moulding tool according to either claim 7 or claim 8, in which there is provided on each side of the mould cavity (32) a tool insert (18, 38; 96, 98) that determines the shape of the precision article to be manufactured, which tool insert is held around its circumference in a form fit in a positioning plate (16, 36; 110, 112) made of a material that exhibits negligible thermal expansion in a working temperature range.

10. A moulding tool according to any one of claims 7 to 9, in which the positioning means comprise index pins (54; 114).

11. A moulding tool according to claim 9, in which the positioning plates (16, 36) are held in a precisely defined position relative to one another by the positioning means (54, 58).

12. A moulding tool according to claim 10, in which
(a) index pins (54) are mounted on one of the positioning plates (36), and
(b) the other positioning plate (16) has, in alignment with each index pin (54), an opening (56) having an index bush (58), the tool inserts (18, 38) opposed to one another being in correct alignment with one another when the index pins (54) engage in the index bushes (58).

13. A moulding tool according to claim 10, in which
(a) index pins (114) are mounted on one of the support plates (98), and
(b) the other support plate (94) has, in alignment with each index pin (114), an opening (124) having an index bush (116), the tool inserts (96,100) opposed to one another being in correct alignment with one another when the index pins (114) engage in the index bushes (116).

14. A moulding tool according to claim 13, in which
(a) the tool inserts (96,100) are held in openings in positioning plates (110,112),
(b) the positioning plates (110,112) are guided with index bushes (118,120) on the index pins (114) that position the support plates (94, 98) relative to one another and are thus positioned relative to one another and to the support plates (94, 98), and
(c) the positioning plates (110, 112) are joined to the support plates (94, 98) by optical wringing.

15. A moulding tool according to any one of claims 8 to 14, in which each support plate (14, 34; 94, 98) forms a stop (24, 44) against which the tool insert (18, 38; 96, 100) rests in the direction perpendicular to the support plate (14, 34; 94, 98).

16. A moulding tool according to claim 15, in which the tool insert (18, 38; 96,100) is joined to the support plate (14, 34; 94, 98) by optical wringing.

17. A moulding tool according to any one of claims 7 to 16, in which guide means for guiding the mould halves to the closed position allow a small amount of lateral movement of the mould halves so that alignment can be effected solely in accordance with the positioning means (54, 58) of the supports (16, 36).

18. A moulding tool according to claim 8, in which each of the tool inserts (62) has a plurality of mould-cavity-defining surfaces for the simultaneous manufacture of a number of precision articles to be moulded.

19. A moulding tool according to claim 7, in which in each mould half
(a) there is mounted on a support plate (66) a plurality of tool inserts (68, 70) that are made of a material that exhibits negligible thermal expansion in a working temperature range, and
(b) each of the tool inserts (68, 70) is positioned individually relative to its counterpart on the other mould half by positioning means (74, 76; 78, 80).

20. A moulding tool according to claim 19, in which each of the tool inserts (68, 70) has a plurality of mould-cavity-defining surfaces for the simultaneous manufacture of a number of precision articles to be moulded.

21. A moulding tool according to claim 7, in which
(a) each of the mould halves has a single plate (82) made of a material that exhibits negligible thermal expansion in a working temperature range, in which plate there are formed a plurality of mould-cavity-defining surfaces (84) for the simultaneous manufacture of a number of precision articles to be moulded, and
(b) that plate (82) is positioned relative to its counterpart in the other mould half by centring means (86, 88).

22. A moulding tool according to any one of claims 7 to 20, in which a glass ceramics material is provided as material that exhibits negligible thermal expansion in a working temperature range.

23. A moulding tool according to any one of claims 7 to 20, in which a quartz glass is provided as material that exhibits negligible thermal expansion in a working temperature range.

24. A moulding tool according to claim 23, in which mould inserts provided as shape-determining tool portions consist of quartz glass.

25. A moulding tool according to any one of claims 7 to 20, in which a metal alloy having low thermal expansion, for example Invar, is provided as material that exhibits negligible thermal expansion in a working temperature range.

## Revendications

1. Un procédé de positionnement réciproque de paires de portions opposées d'un outil de moulage déterminant la forme (18, 38 ; 96, 100) qui coopèrent pour former une cavité du moule (32 ; 106), pour la fabrication d'articles de précision, spécialement de lentilles de contact, procédé selon lequel la position des deux éléments associés aux portions de l'outil de moulage (18, 38 ; 96, 100) les uns par rapport aux autres est déterminée précisément par des moyens de positionnement,
caractérisé en ce que
la position de chacune des portions de l'outil (18, 38 ; 96, 100) est déterminée par un élément associé
fait avec une matière qui a une expansion thermique négligeable dans un intervalle de température de fonctionnement.

2. Un procédé selon la revendication 1, caractérisé en ce que
(a) les portions de l'outil (18, 38; 96, 100), dans les positions résultantes, sont fixées chacune à un support (14, 34 ; 94, 98) fait avec une matière qui a une expansion thermique négligeable dans un intervalle de température de fonctionnement, et
(b) l'élément de positionnement est ensuite retiré.

3. Un procédé selon la revendication 2, caractérisé en ce que
(a) les portions de l'outil (18, 38 ; 96, 100) et les supports (14, 34; 94, 98) sont munis de surfaces plates polies, et
(b) la fixation des portions de l'outil (18, 38; 96, 100) est assurée par un serrage optique.

4. Un procédé selon l'une quelconque des revendications 1 à 3, caractérisé en ce que comme matière qui a une expansion thermique négligeable dans un intervalle de température de fonctionnement, on utilise de la céramique de verre.

5. Un procédé selon l'une quelconque des revendications 1 à 3, caractérisé en ce que comme matière qui a une expansion thermique négligeable dans un intervalle de température de fonctionnement, on utilise un verre de quartz.

6. Un procédé selon l'une quelconque des revendications 1 à 3, caractérisé en ce que comme matière qui a une expansion thermique négligeable dans un intervalle de température de fonctionnement, on utilise un alliage de métal à faible expansion thermique, par exemple « Invar ».

7. Un outil de moulage pour la fabrication d'articles de précision, en particulier de lentilles de contact, comprenant 2 moitiés d'outils (10, 12 ; 90, 92) formant une cavité du moule (32; 106) ayant des portions de l'outil déterminant la forme (18, 38 ; 96, 100),
caractérisé en ce que
(a) la position des portions de l'outil déterminant la forme (18, 38; 96, 100) dans chacune des moitiés de l'outil (10, 12 ; 90, 92) est déterminée par des supports (14, 34 ; 94, 98) faits avec une matière qui a une expansion thermique négligeable dans un intervalle de température de fonctionnement, et
(b) la position réciproque des supports (14, 34; 94, 98) est déterminée par des moyens de positionnement à précision élevée (54, 58; 114, 116) qui agissent directement entre les deux supports (14, 34 ; 94, 98).

8. Un outil de moulage selon la revendication 7, caractérisé en ce que les parties insérées de l'outil (18, 38 ; 96, 100) sont montées chacune sur une plaque de support (14, 34 ; 94, 98) faite avec une matière qui a une expansion thermique négligeable dans un intervalle de température de fonctionnement.

9. Un outil de moulage selon la revendication 7 ou 8, caractérisé en ce que sur chaque côté de la cavité du moule (32) il y a une partie insérée de l'outil (18, (18, 38; 96, 98) qui détermine la forme de l'article de précision à fabriquer, qui est maintenue fixe autour de sa circonférence dans une plaque de positionnement (16, 36; 110, 112) faite avec une matière qui a une expansion thermique négligeable dans un intervalle de température de fonctionnement.

10. Un outil de moulage selon l'une quelconque des revendications 7 à 9, caractérisé en ce que le moyen de positionnement comprend des chevilles (54, 114).

11. Un outil de moulage selon la revendication 9, caractérisé en ce que les plaques de positionnement (16, 36) sont maintenues dans une position précisément définie les unes par rapport aux autres à l'aide de moyens de positionnement (54, 58).

12. Un outil de moulage selon la revendication 10, caractérisé en ce que
(a) des chevilles (54) sont montées sur une des plaques de positionnement (36), et
(b) l'autre plaque de positionnement (16), alignée avec la cheville (54) comporte une ouverture (56) ayant un logement (58), les parties insérées de l'outil (18, 38) opposées les unes par rapport aux autres étant en alignement correct les unes avec les autres lorsque les chevilles (54) s'engagent dans les logements (58).

13. Un outil de moulage selon la revendication 10, caractérisé en ce que
(a) des chevilles (114) sont montées sur une des plaques de support (98), et
(b) l'autre plaque de support (94), alignée avec la cheville (114) comporte une ouverture (124) ayant un logement (116), les parties insérées de l'appareil (96, 100) opposées les unes par rapport aux autres étant en alignement correct les unes avec les autres lorsque les chevilles (114) s'engagent dans les logements (116).

14. Un outil de moulage selon la revendication 13, caractérisé en ce que
(a) Les parties insérées de l'outil (96, 100) sont maintenues dans des ouvertures des plaques de positionnement (110, 112),
(b) les plaques de positionnement (110, 112) sont guidées avec des logements (118, 120) sur les chevilles (114) qui positionnent les plaques de support (94, 98) les unes par rapport aux autres et sont donc positionnnées les unes par rapport aux autres et aux plaques de support, (94, 98) et,
(c) les plaques de positionnement (110, 112) sont reliées aux plaques de support (94, 98) par serrage optique.

15. Un outil de moulage selon l'une quelconque des revendications 8 à 14, caractérisé en ce que la plaque de support (14, 34; 94, 98) forme un arrêt (24, 44), contre lequel la partie insérée de l'outil (18, 38; 96,100) reste en direction perpendiculaire par rapport à la plaque de support (14, 34, 94, 98).

16. Un outil de moulage selon la revendication 15, caractérisé en ce que la partie insérée de l'appareil (18, 38; 96, 100) est reliée à la plaque de support (14, 34; 94, 98) par serrage optique.

17. Un outil de moulage selon l'une quelconque des revendications 7 à 16, caractérisé en ce que le moyen de guidage pour guider les moitiés du moule vers la position fermée, permet un faible mouvement latéral des moitiés du moule, de sorte à ce que l'alignement peut être effectué uniquement selon les moyens de positionnement (54, 58) des supports (16, 36).

18. Un outil de moulage selon la revendication 8, caractérisé en ce que chacune des parties insérées de l'outil (62) a une pluralité de surfaces définissant une cavité du moule pour la fabrication simultanée de plusieurs articles de précision à mouler.

19. Un outil de moulage selon la revendication 7, caractérisé en ce que dans chaque moitié du moule
(a) on monte sur une plaque de support (66) une pluralité de parties insérées de l'outil (68, 70) qui sont faites avec une matière qui a une expansion thermique négligeable dans un intervalle de température de fonctionnement, et
(b) chacune des parties insérées de l'outil (68, 70) est positionnée individuellement par rapport à son contraire sur l'autre moitié du moule, à l'aide de moyens de positionnement (74, 76 ; 78, 80).

20. Un outil de moulage selon la revendication 19, caractérisé en ce que chacune des parties insérées de l'outil (68,70) comporte une pluralité de surfaces définissant une cavité du moule pour la fabrication simultanée de plusieurs articles de précision à mouler.

21. Un outil de moulage selon la revendication 7, caractérisé en ce que
(a) chacune des moitiés du moule a une plaque unique (82) faite avec une matière qui a une expansion thermique négligeable dans un intervalle de température de fonctionnement, plaque dans laquelle il se forme une pluralité de surfaces définissant une cavité du moule (84) pour la fabrication simultanée de plusieurs articles de précision à mouler, et
(b) cette plaque (82) est positionnée par rapport à son contraire dans l'autre moitié du moule, à l'aide de moyens de centrage (86, 88).

22. Un outil de moulage selon l'une quelconque des revendications 7 à 20, caractérisé en ce que comme matière qui a une expansion thermique négligeable dans un intervalle de température de fonctionnement, on prévoit de la céramique de verre.

23. Un outil de moulage selon l'une quelconque des revendications 7 à 20, caractérisé en ce que comme matière qui a une expansion thermique négligeable dans un intervalle de température de fonctionnement, on prévoit un verre de quartz.

24. Un outil de moulage selon la revendication 23, caractérisé en ce que les parties insérées du moule prévues comme portions de l'outil déterminant la forme, sont faites avec du verre de quartz.

25. Un outil de moulage selon l'une quelconque des revendications 7 à 20, caractérisé en ce qu'un alliage de métal ayant une faible expansion thermique, par exemple «Invar», est prévu comme matière qui a une expansion thermique négligeable dans un intervalle de température de fonctionnement.
